# EUROPEAN PATENT SPECIFICATION

(11) **EP 1 790 236 B1**
(45) Date of publication and mention of the grant of the patent: **17.12.2008**
(21) Application number: 05111368.6
(22) Date of filing: 28.11.2005
(51) Int. Cl.: A23L 1/187, A23L 1/0534, A23C 9/154, A23L 1/00

(54) **Composite food product comprising a non-acidic dairy component, and the preparation thereof**
Komposit Lebensmittel enthaltend eine nichtsaure Milch-Komponente und Verfahren zu dessen Herstellung
Produit alimentaire composite comprenant une composante lactée non-acide et son procédé de préparation

(43) Date of publication of application: 30.05.2007
(73) Proprietor: Campina Nederland Holding B.V., 5301 LB Zaltbommel (NL)
(72) Inventor: Pyett, Stacy Christine, 6721 GX Bennekom (US); Kloek, William, 5467 BR Veghel (NL)
(74) Representative: van Westenbrugge, Andries

(56) References cited:
- EP-A- 0 605 097
- EP-A- 0 853 888
- US-A- 3 996 390
- US-A- 4 046 925
- US-A- 5 360 625
- US-A1- 2003 194 468
- DATABASE WPI Section Ch, Week 200301 Derwent Publications Ltd., London, GB; Class A97, AN 2003-003118 XP002379241 & JP 2002 171902 A (ASAHI KASEI KOGYO KK) 18 June 2002 (2002-06-18)

## Description

### FIELD OF THE INVENTION

The invention pertains to a composite food product, in particular a dessert product, comprising at least an acidic phase and at least a non-acidic dairy phase in contact therewith, and to the preparation of such a composite food product.

### BACKGROUND OF THE INVENTION

In food industry there is a continuous demand from consumers for combinations of food ingredients having diverse visual properties and taste perception together in a single compartment packaging. Over the years this has resulted in for instance combinations of different existing dessert components to form new dessert applications, as there are for instance the Boer'n Yoghurt and Boer'n Vla product lines by Zuivelhoeve, available on the Dutch market since 2000. These products are examples of bilayer food systems comprising a dairy layer deposited on top of and in direct contact with another layer, in these particular cases yoghurt or custard. Such products were traditionally prepared in the kitchen, but are difficult to produce on an industrial scale.

Unfortunately, the choice of components in such composite food products is restricted. For food products comprising a non-acidic dairy component and an acidic second component in contact therewith, the appearance of a skin layer has been reported in F. Warin et al. "Formation of a protein aggregate layer at a milk/acidified gel interface" Int. Dairy Journal 8 (1998) pp. 801 - 806. This skin layer provides the product with a grainy dairy layer, in the article described as being "sandy", which layer is unattractive from a consumer's perspective.

Supposedly, the grainy skin layer formed on the interface is to be attributed to the acidification of milk due to the migration of acid from the acidic phase, such as a fruit phase having a pH of approximately 3 - 4, towards the dairy phase. In the model study by Warin et al. a grainy layer systematically appeared in the region of milk where the pH was below 4.9, close to the gelation pH 4.7 - 4.8 of milk, where milk protein particles aggregate at room temperature to form a gel network. The layer could thus be described as a gelation layer.

Hence, food combinations of non-acidic dairy phase with an acidic phase in contact therewith, such as pudding with sauce, are readily available in the market, but are missing the fresh appearance. In some of the combinations within the above-mentioned product line of Zuivelhoeve, a 1 cm thick gelation layer is even common. The grainy mouthfeel of this layer is often masked by solid-like foodstuffs like fruit pieces. Nevertheless, this does not take away the fact that an unpleasant grainy layer at the interface develops and restricts the selection of components.

Further, it has been known for decades that dairy products show coagulation upon acidification, in accordance with the study by Warin et al.. GB-986940 relates to a process for acidified dairy products by direct addition of an edible acid to milk or cream until pH 3.7 - 5, particularly between 4.0 and 4.7, wherein the milk has been stabilised with 0.5 - 1 % of an anticoagulant to prevent coagulation and separation of curd and whey. A large number of hydrophilic colloids which act as stabilisers is cited therein as being effective anticoagulants in acified milk products. The document is silent on combinations of foodstuffs, and on the role of those hydrophilic colloids in reducing gelation at the interface.

From US 3 996 390 acidified milk gel products are known that use carboxymethylcellulose as part of a thickener system.

EP 0 853 888 discloses dessert-product comprising a milk-based component and embedded in said component pieces based on fruit puree, fruit juice or fruit granulates comprising a low methoxylated pectin. EP 0 605 097 discloses a composite milk product containing gelled particles based on xanthan and locust bean gum.

Hence, there is a need for combinations of non-acidic dairy components with acidic food components, wherein the combination has an improved visual appearance and taste perception and is not troubled by the unwanted interaction of the individual components such as formation of an unpleasant grainy layer at the interface, resulting e.g. in a sandy taste.

### DESCRIPTION OF THE INVENTION

It is an object of the invention to provide a composite food product comprising a non-acidic dairy component and an acidic phase in contact therewith as defined in claim 1, wherein a grainy layer at the interface in-between is reduced or even absent, meaning not perceptible, after storage for one week at 7 °C, preferably after two weeks at 7 °C.

It has now been found that non-acidic dairy foodstuffs can be combined with acidic food components to form a composite food product to minimise or even prevent an unpleasant interfacial layer after storage for one week at 7 °C, preferably after two weeks at 7 °C, by providing the non-acidic dairy phase with carboxymethylcellulose.

The present invention thus relates to a composite food product comprising at least a non-acidic dairy phase and an acidic food phase in contact therewith, wherein said non-acidic dairy phase contains carboxymethylcellulose.

Carboxymethylcellulose is a hydrocolloid. In the food industry hydrocolloids are often used to stabilise acidified dairy products. For instance pectin is applied in drinks because of its stabilising effect on protein. Other hydrocolloid stabilisers in use in acidified dairy products are e.g. gellan gum and xanthan gum. However, it was found that inclusion of carboxymethylcellulose greatly reduces gelation at the interface, whereas hydrocolloid stabilisers show hardly any effect, as is evidenced in the attached examples. Hence, the effect or reducing gelation at the interface cannot be attributed to a feature inherent to a hydrocolloid stabiliser.

The use of carboxymethylcellulose in the non-acidic dairy phase is even more unobvious, since nowadays it no longer belongs to the first choice stabilisers for foodstuffs, as it is believed to provide a foodstuff with a sticky taste perception which is absent or less pronounced with other stabilisers. Where carboxymethylcellulose is presently associated with dairy products, it functions as a thickener in frozen applications, such as ice creams. However, according to Walstra P. et al. "Dairy Technology", publisher Marcel Dekker, p423, in such solid applications containing ice crystal particles the formation of a grainy gel layer, if at all present, is only of minor importance.

A composite food product according to the invention is spoonable or pourable, and incorporates combinations of foodstuffs in a single compartment packaging, wherein at least two distinct domains are in contact with one another. "Distinct" means that these domains should be large enough for a consumer to appreciate the different foodstuffs visually and/or taste-wise, typically a volume of at least 1 ml. In a preferred embodiment the composite food product is recognised by a consumer as a dessert. The composite food product can comprise a collection of small domains of one food component dispersed in a continuous phase of another food component, such as blurred systems in which the contact layers are elongated and very thin, e.g. 1 mm, and in which the undesired effect of a grainy layer formed in the non-acidic dairy phase in direct contact with the acidic phase would be most dramatic. The composite food product is thus not to be mistaken with an emulsion-type of food, although a domain could very well be an emulsion in itself. In a preferred embodiment the composite food product is a bilayer or multilayer food system, wherein the non-acidic dairy phase and the acidic phase form layers on top of one another, each layer having a thickness of at least 1 mm. There is no preference to which phase forms the top layer or whether one of more phases form a continuous layer, so it can even be a custard with small pieces of fruit dispersed in it.

Here below, all domains containing similar ingredients and amounts thereof in the composite food product are referred to as a single "phase". A single phase could thus comprise a collection of separate domains, for instance dispersed in another (continuous) phase. As aforementioned, the composite food product comprises at least a non-acidic dairy phase and an acidic phase.

A "dairy phase" in the context of the invention is predominant in milk-based ingredients, i.e. containing for at least 50 wt% , preferably for at least 60 wt%, more preferably for at least 75 wt% of ingredients originating from milk, such as milk powder, caseinate and whey protein concentrate. The problem of gelation upon contact with an acidic phase especially occurs in a caseinate-containing dairy phase, where acidification results in the formation of a casein gel.

A "non-acidic dairy phase" is understood to be a dairy phase having a pH greater than the gelation point of milk proteins, preferably a pH greater than 5, more preferably at least pH 5.5, most preferably pH 6 - 8. It includes acidified milk-based products known in the art, having the above-cited pH, wherein acidification is performed at conditions at which protein precipitation is avoided. The non-acidic dairy phase can be pourable or spoonable at a temperature of 7 °C. The effect of a grainy layer in the non-acidic dairy phase in contact with the acidic phase is disturbing in e.g. both pudding and custard or the Dutch equivalent "vla". However, the benefits of the invention are of minor importance in frozen or baked dairy applications, such as ice cream and baked custard, because the taste perception of the sandy layer is not observed in such a semi-solid or solid product. These frozen or baked dairy applications are not the preferred uses of the invention. It is also preferred that the whole composite food product is a non-frozen and non-baked composite food product.

In contrast, an "acidic phase" in the context of the invention means a phase having a pH close to or lower than the gelation point of milk proteins, i.e. less than 5, preferably pH 2 - 4.5. When an acidic phase is in direct contact with the aforementioned non-acidic dairy phase containing milk proteins, acid migration would locally initiate gel formation in the outermost layer of the non-acidic dairy phase. The acidic phase can be any acidic food component. It can for instance contain a fruit component, for instance fruit sauce, fruit jelly, and/or fruit pieces, typically having a pH of about 3 - 4. Like the non-acidic dairy phase, the acidic phase is preferably a pourable or spoonable phase having a viscosity of at least 2000 mPas at 7 °C. It may comprise solid or semi-solid food pieces such as fruit pieces. The acidic phase can also be a dairy product, for instance an acidified and/or fermented milk product, preferably a yoghurt, alone or in combination with other foodstuffs, such as fruit-flavoured yoghurt.

A preferred composite food product is one wherein the non-acidic dairy phase comprises custard and/or pudding, and wherein the acidic phase comprises fruit and/or yoghurt.

Preferably the bilayer or multilayer composite food product comprises one layer containing custard and/or pudding, and one layer in contact therewith containing fruit and/or yoghurt.

Carboxymethylcellulose, commonly referred to as CMC, is incorporated in the non-acidic dairy phase in a concentration of at least 0.1 wt%, more preferably at least 0.2 wt%, most preferably at least 0.3 wt% of the non-acidic dairy phase. The actual amount of CMC required to minimise the effect of a grainy outermost layer of the non-acidic dairy phase in contact with the acidic phase is also dependent on the pH difference, mostly related to the pH of the acidic phase. An acidic phase having pH 3 would require a higher dosage of CMC to minimise the sandy interfacial layer to the same extent than an acidic phase having pH 4. Because of the undesired effect of those compounds, especially CMC, on the stickiness of the product, the amount is preferably kept low, i.e. preferably less than 2.0 wt%.

CMC can be used as the commercially available food additive E466 according to European food standards, unrestricted to a particular weight or molecular weight distribution. CMC preferably possesses an average molecular weight of about 50 - 1000 kDa, more preferably 90 - 700 kDa. Suitable candidates are Cekol 2000 and Cekol 30, both available from Brenntag Specialities Loosdrecht (the Netherlands).

A composite food product containing a non-acidic dairy phase comprising CMC and an acidic phase in contact therewith is characterised by having an interface between both phases which is, if noticed at all, appreciated by consumers as being soft. For consumer's perception of a good composite product, the gel strength, i.e. the firmness of the outer layer of the non-acidic dairy phase in contact with the acidic phase, is an important parameter; the layer thickness only plays a minor role in the perception of the composite product: a thin, firm grainy interfacial layer is more noticeable than a thick soft layer. Where mention is made of an "interfacial layer" in context of the invention, it is meant a part or layer of the non-acidic dairy phase in contact with the acidic phase, which part or layer differs from the bulk of the non-acidic dairy phase, because it is more firm and/or has a particulated, grainy or sandy nature sensible to the average consumer.

In terms of texture properties, the gel strength of the interface layer is commonly characterised by texture analysis. Here below, a test is given which provides the skilled person with a tool involving conventional measuring techniques for determining whether a composite food product falls within the scope of the invention. Thereto:
- a sample of the composite product is provided in such a way that the non-acidic dairy phase forms the bottom layer, wherein the top acidic layer is removed after sufficient storage time at 7 °C, thus leaving the outer layer of the non-acidic dairy phase exposed. To avoid boundary effects, the sample should be filled in a cup having an inner diameter of at least about 90 mm. A Mona pudding cup is suitable for this purpose, being a slightly conical cup with an upper diameter of e.g. 112 mm and a lower diameter of e.g. 90 mm, the sides of the cup making an angle of about 15°;
- the sample is then subjected to texture analysis, for instance using a Stable Microsystems TA-XT2i Texture Analyser (Stable Micro Systems, Surrey, UK) with the following settings:
   ■ "measure force in compression";
   ■ automatic trigger at 5 g force;
   ■ body geometry: 38 mm diameter 40 mm high plastic cylinder;
   ■ test speed 0.5 mm/s, and pre- and post-test speed 2.0 mm/s;
   ■ penetration distance 30 mm; and
   ■ sample temperature 7 °C;
The force F measured with texture analysis is recalculated to stress by dividing the force by the contact surface area A of the body geometry.

The stress (F/A) - penetration curve can be normalised by dividing the stress measured at a certain distance in the sample by the stress measured at the same distance when the non-acidic dairy phase would not be in contact with an acidic phase, thereby applying the same measuring conditions. In other words, normalised stress is the actual stress relative to the stress in absence of contact with an acidified phase. With the normalised stress - penetration curve a skilled person can directly and unambiguously determine the firmness of the outer layer of the non-acidic dairy phase in contact with the acidic phase, in principle independent of the above-given test and conditions applied therein.

The composite food product according to the invention has an interface exhibiting a maximum in normalised stress of less than 1.2, preferably even less than 1.15. In practice, the interface layer in the composite food product containing CMC in the non-acidic dairy phase is virtually and sensibly absent, having a normalised stress of about 1.

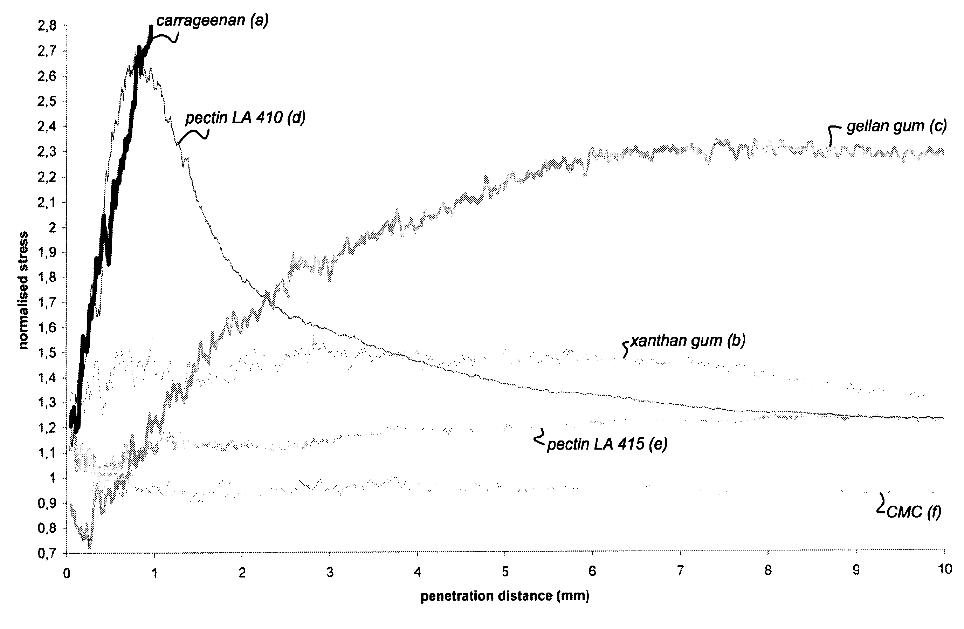

Signal noise in a measurement is related to the dependence of firmness - and therewith the stress value - on the local concentrations of hydrocolloids and the bulk stress values. The signal noise could be compensated for by fitting the normalised stress - penetration curve with a sixth-order polynomial fit. The maximum of the sixth-order polynomial fit of the normalised stress - penetration curve can be determined visually, and is herebelow referred to as the peak ratio. The peak ratio is a simpler way to effectively compare samples prepared from different hydrocolloids and concentrations thereof, since variations in the product viscosity are accounted for. An example of a normalised stress - penetration curve is given in figure 1, comparing the normalised curves for carrageenan, xanthan gum, pectin LA410 and LA415, gellan gum and CMC. According to the invention, the peak ratio is preferably less than 1.2, more preferably less than 1.15.

Where carboxymethylcellulose is applied to prevent the formation of a grainy interface layer, its possible negative influence on the stickiness of the food product could be compensated or masked using additional hydrocolloid stabilisers, such as carragheenan or pectin. These stabilisers do not contribute to the minimisation of the gel layer, but improve the sensory properties of a composite food product containing CMC. The amounts of such stabilisers can easily be determined by a person skilled in the art, and are dependent on the viscosity of the product and the amount of CMC used. Additional hydrocolloid stabilisers may especially be used in case of a strong acidic phase, where acid migration in to the non-acidic dairy phase is most pronounced and large amounts of CMC are required to minimise gelation at the interface. It is preferred that the ratio of the weight amount of CMC to the amount of additional hydrocolloid stabilisers is at least 1:1, preferably at least 3:2. Surprisingly, the additional hydrocolloid stabilisers do not adverse the beneficial effect of CMC on reducing gelation at the interface.

The invention further relates to a composite food product comprising at least a non-acidic dairy phase and an acidic food phase in contact therewith, wherein the interface between said non-acidic dairy phase and said acidic phase has a firmness expressed as a maximum in normalised stress of less than 1.2, preferably even less than 1.15, after 7 days storage at 7 °C, preferably even after 14 days storage at 7 °C.

The invention also relates to the preparation of the above-described composite food products, wherein carboxymethylcellulose is added to a non-acidic dairy phase, and said non-acidic dairy phase is then brought into contact with an acidic phase. The non-acidic dairy phase and the acidic phase are introduced into a container a) simultaneously, for instance by using separate supply lines; b) one after another, to form a bilayer or multilayer system; or c) after a pre-mixing step.

The invention further relates to the use of CMC to minimise the gelation interface layer thickness, in a composite food product containing a non-acidic dairy phase and an acidic phase in contact therewith. CMC is preferably used in a proportion of 0.1 - 2 g per 100 g non-acidic dairy phase, optionally in combination with 0.01 - 0.5 g of additional hydrocolloids per 100 g, especially pectin or carragheenan.

### EXAMPLES

### Example 1

### Non-acidic dairy phase - pudding

Standard puddings with various hydrocolloid stabilisers were prepared. Thereto, 8 wt% sugar and 3.2 wt% amylum 349 (Tate & Lyle, London, UK) were mixed together with one of the hydrocolloid stabilisers a) - f) listed below, and slowly added to skim milk with high stirring at room temperature. The weight percentages are based on the total weight of the mixture thus obtained.

### Hydrocolloid stabilisers

a) 0.3% Grinsted carrageenan 360C (Danisco, Copenhagen, Denmark);
b) 0.4% Grinsted Xanthan X (Danisco);
c) 0.2% Kelcogel Gellan gum LT100 (CPKelco, Atlanta, USA);
d) 0.8% Grinsted Pectin LA 410 (Danisco);
e) 0.4% Grinsted Pectin LA 415 (Danisco);
f) 1.0% Celkol CMC 2000 (CP Kelco).
The prepared mixtured will be addressed in the examples with A - F, depending on the actual hydrocolloid stabiliser used.

### Acidic phase - fruit sauce

Separately, a fruit sauce was prepared using the following components (and amounts thereof):
21 % Sucrose;
4% Glucose;
4% Fructose;
1.5% National 2600 (National Starch & Chemical Company, Bridgewater, NJ);
0.6% Grinsted Pectin LA415 (Danisco); and
Water to 100%.
The fruit sauce was acidified with citric acid to pH 3.4.

### Preparation of composite product - pudding with fruit sauce

The mixtures A - F were heated to 90°C for 5 minutes. After cooling to 10°C a number of standard Mona cups was filled with 450 ml of the puddings A - F. These cups were then covered with a turned upside-down second standard Mona cup. Of each mixture A - F two cups were filled. One of these cups was then topped with 100 ml of the fruit sauce with the above recipe. The other cup contained no fruit sauce but a plastic film on top. These will be referred to as Control A - F. The samples and their controls were stored at 7°C for 7 days.

### Test of composite product

In order to determine any change in the pudding texture, the puddings were tested before and after storage on layer firmness with texture analysis in accordance with the test scheme provided in the description. The test results obtained after storage are shown in Figure 1 and Table 1, sorted on increasing peak ratio.

Separately, a panel also evaluated the puddings on smoothness, appearance and mouthfeel before and after storage. The results of the sensory evaluation corresponded with the findings on texture analysis. The results of the evaluation are summarised below.

**Table 1: Peak ratios for various hydrocolloids**

| Hydrocolloid | Peak ratio |
|---|---|
| CMC (f)* | 1.01 |
| Pectin LA 415 (e) | 1.21 |
| Xanthan gum (b) | 1.49 |
| Gellan gum (c) | 2.22 |
| Pectin LA 410 (d) | 2.58 |
| Carrageenan (a) | 5.42 |

| | |
|---|---|
| *The same peak ratio was observed even after 14 days of storage at 7°C | |

Pudding A with carrageenan is the reference pudding, having a dramatically high peak ratio of 5.42.
According to the test, pectin LA 410 pudding E resulted in a firmer gelled layer than Pectin LA 415 pudding D. The gelled layer in pudding D easily fell apart by touch compared to pudding E. Mouthfeel properties showed pudding D gave better taste since the layer was soft. The sensory evaluation was in accordance with figure 1.

The gellan gum pudding C looked very viscous, also a little elastic. It tasted very firm and had an unsmooth mouthfeel. A gelled layer was clearly formed after 7-day storage, both visible and sensible, and the overall pudding had an unpleasant grainy mouthfeel. Texture analysis revealed that the gelled layer was strong, as indicated in figure 2.

The xanthan pudding B looked shiny, tasted smooth and showed desired mouthfeel directly after preparation. However, after storage a white gelled layer was formed. The gelled layer was soft with a particulated nature, especially in comparison to puddings C - E. Despite of the particulated structure, texture analysis also revealed the relative softness of the layer.

The CMC pudding F showed a significant improvement in preventing gelation. According to the texture analysis measurements, no gelled layer at all was formed. An extra test after two weeks of storage still showed no gelled layer. The normalised stress - penetration curve substantially overlapped with the one shown in figure 1, and the peak ratio corresponded to the value obtained after 7 days.

### Example 2

Two puddings were prepared according to standard recipes similar to the preceding example. Again, a pudding having a non-acidic dairy phase containing carrageenan (Grinsted Carrageenan 360C, Danisco) was used as the reference pudding. A second pudding differed therefrom in that the non-acidic phase further contained CMC (Celkol CMC2000, CP Kelco). Whole milk instead of skim milk was used in both puddings. The percentages are summarised in table 2.

As the acidic topping 100 ml apple fruit preparation (Zentis, Aachen, Germany) was used.

**Table 2: amounts of stabilisers in puddings**

| | CMC celkol 2000 | Carrageenan 360C |
|---|---|---|
| Pudding I | 0 | 0.3 |
| Pudding II | 0.5 | 0.2 |

The hydrocolloid puddings were full fat. Each hydrocolloid pudding had one control and one sample in pudding pots A for texture analysis and one control and one sample in pudding pots B for sensory evaluation. The control pudding in pudding pot A had no apple sauce but a plastic film on top, while the sample in pudding pot A had 100 g apple sauce on top. The pudding pot B contained 100 g pudding and 50 g apple sauce for sensory evaluation. All puddings were stored at 7°C for 7 days.

The sensory evaluation focussed on mouthfeel of the pudding and gelation in the pudding. The acceptability of each pudding was determined based on overall evaluation results of a test panel.

After 7 days pudding II showed no gelled layer (pot A). Compared to a pudding only containing CMC prepared according to example 1, pudding II was less sticky and more pourable and spoonable (pot B). No change in texture was observed after 7 days.

Pudding I formed a very thick layer, visually around 1.5 cm thick after 7 days. Pudding I had a grainy mouthfeel indicating significant aggregation.

Texture analysis yielded normalised stress - penetration curves similar to the one obtained in example 1 for pudding F (CMC). Peak ratios of puddings I and II were 3.86 and 1.14, respectively.

## Claims

1. A composite food product comprising at least a non-acidic dairy phase and an acidic food phase in contact therewith, wherein said non-acidic dairy phase contains carboxymethylcellulose, and wherein said non-acidic dairy phase and said acidic phase are layers in a bilayer or multilayer food system.

2. The composite food product according to claim 1, wherein carboxymethylcellulose is present in an amount of 0.1 - 2 wt% of said non-acidic dairy phase.

3. The composite food product according to any one of the preceding claims, wherein said non-acidic dairy phase comprises custard and/or pudding, and wherein said acidic phase comprises fruit and/or yoghurt.

4. The composite food product according to any of the preceding claims, having an interface between said non-acidic dairy phase and said acidic phase exhibiting a maximum in normalised stress of less than 1.2 after one week storage at 7 °C.

5. A method for preparing a composite food product according to any one of the preceding claims, wherein carboxymethylcellulose is added to a non-acidic dairy phase, and said non-acidic dairy phase is then brought into contact with an acidic phase.

6. The method according to claim 5, wherein said non-acidic dairy phase and said acidid phase are introduced into a container simultaneously, one after another or after a pre-mixing step.

7. Use of carboxymethylcellulose to minimise the gelation interface layer thickness in a composite food product containing a non-acidic dairy phase and an acidic phase in contact therewith.

## Patentansprüche

1. Komposit-Lebensmittel, umfassend eine nicht saure Milchphase und eine saure Phase in Kontakt mit dieser, wobei die nicht saure Milchphase Carboxymethylzellulose enthält und wobei die nicht saure Milchphase und die saure Phase Schichten in einem zweischichtigen oder mehrschichtigen Lebensmittelsystem sind.

2. Komposit-Lebensmittel nach Anspruch 1, wobei Carboxymethylzellulose in einer Menge von 0,1 bis 2 Gewichtsprozent der nicht sauren Milchphase vorhanden ist.

3. Komposit-Lebensmittel nach einem der vorangehenden Ansprüche, wobei die nicht saure Milchphase Vanillesauce und/oder Pudding umfasst, und wobei die saure Phase Frucht und/oder Joghurt umfasst.

4. Komposit-Lebensmittel nach einem der vorangehenden Ansprüche mit einer Grenzfläche zwischen der nicht sauren Milchphase und der sauren Phase, die ein Maximum in der normalisierten Belastung von weniger als 1,2 nach einer einwöchigen Lagerung bei 7°C aufweist.

5. Verfahren zur Herstellung eines Komposit-Lebensmittels nach einem der vorangehenden Ansprüche, wobei Carboxymethylzellulose einer nicht sauren Milchphase zugegeben wird, und die nicht saure Milchphase dann mit einer sauren Phase in Kontakt gebracht wird.

6. Verfahren nach Anspruch 5, wobei die nicht saure Milchphase und die saure Phase gleichzeitig, nacheinander oder nach einem Vormischungsschritt in einen Behälter eingebracht werden.

7. Verwendung von Carboxymethylzellulose zur Minimierung der Gelierungsgrenzschichtdicke in einem Komposit-Lebensmittel, das eine nichtsaure Milchphase und eine saure Phase in Kontakt mit dieser enthält.

## Revendications

1. Produit alimentaire composite comprenant au moins une phase lactée non-acide et une phase alimentaire acide au contact de celle-ci, dans lequel ladite phase lactée non-acide contient de la carboxyméthylcellulose, et dans lequel ladite phase lactée non-acide et ladite phase acide sont des couches dans un système alimentaire bicouche ou multicouche.

2. Produit alimentaire composite selon la revendication 1, dans lequel la carboxyméthylcellulose est présente dans une quantité de 0,1 à 2 % en poids de ladite phase lactée non-acide.

3. Produit alimentaire composite selon l'une quelconque des revendications précédentes, dans lequel ladite phase lactée non-acide comprend une crème lactée et/ou un flan, et dans lequel ladite phase acide comprend un fruit et/ou un yaourt.

4. Produit alimentaire composite selon l'une quelconque des revendications précédentes, présentant une interface entre ladite phase lactée non-acide et ladite phase acide exhibant un maximum de contrainte normalisée inférieur à 1,2 après une semaine de stockage à 7° C.

5. Procédé de préparation d'un produit alimentaire composite selon l'une quelconque des revendications précédentes, dans lequel la carboxyméthylcellulose est ajoutée à une phase lactée non-acide, et ladite phase lactée non-acide est ensuite amenée au contact d'une phase acide.

6. Procédé selon la revendication 5, dans lequel ladite phase lactée non-acide et ladite phase acide sont introduites simultanément dans un récipient, l'une après l'autre ou après une étape de pré-mélange.

7. Utilisation de la carboxyméthylcellulose pour minimiser l'épaisseur de la couche d'interface de gélation dans un produit alimentaire composite contenant une phase lactée non-acide et une phase acide au contact de celle-ci.
